# EUROPÄISCHE PATENTSCHRIFT

(11) **EP 1 095 303 B1**
(45) Veröffentlichungstag und Bekanntmachung des Hinweises auf die Patenterteilung: **04.09.2002**
(21) Anmeldenummer: 99936389.8
(22) Anmeldetag: 01.06.1999
(51) Int. Cl.: G02B 6/44

(54) **SCHUTZ VON GLASFASERN FÜR NACHRICHTENÜBERTRAGUNG MIT HOHLADERN**
PROTECTION OF TELECOMMUNICATION GLASS FIBERS WITH AIR-SPACE PAPER-INSULATED CORE
PROTECTION DE FIBRES DE VERRE POUR TELECOMMUNICATIONS AVEC DES CONDUCTEURS A ISOLEMENT AIR/PAPIER

(30) Priorität: 23.06.1998 DE 19827917
(43) Veröffentlichungstag der Anmeldung: 02.05.2001
(73) Patentinhaber: CCS Technology, Inc., Wilmington, DE 19803 (US)
(72) Erfinder: FRÖHLICH, Franz-Friedrich, D-58091 Hagen (DE); WALLENTOWITZ, Peter, D-58093 Hagen (DE); STATECZNY, Michael, D-58509 Lüdenscheid (DE)
(74) Vertreter: Sturm, Christoph, Dipl.-Ing.
(86) Internationale Anmeldenummer: DE9901621
(87) Internationale Veröffentlichungsnummer: WO99067669

(56) Entgegenhaltungen:
- EP-A- 0 408 266
- EP-A- 0 697 610
- DE-A- 4 405 666
- US-A- 2 301 207
- US-A- 2 916 055
- US-A- 5 358 011
- US-A- 5 515 472
- US-A- 5 694 510

## Beschreibung

Die Erfindung betrifft eine Kabelmuffen verbindung für Glasfaserkabel, mit den Merkmalen im Oberbegriff des Anspruchs 1. Hierdurch wird ein Schutz von z.B. Glasfasern für Nachrichtenübertragung mit Hohladern in Verteilerfeldern von Kassettenanordnungen in Kabelmuffen geschaffen.

Im allgemeinen werden bisher die Glasfasern in den Bündeladern der Glasfaserkabel zum Spleißen bis zu den handelsüblichen Spleißkassetten geführt und von dort wieder über kabeleigene Bündeladern in das abgehende Kabel weitergeleitet. Wenn jedoch in einer Bündelader mehr Glasfasern geführt werden als in einer Spleißkassette gespleißt werden sollen, müssen diese Glasfasern entsprechend aufgeteilt werden, das heißt sie müssen aus der Bündelader herausgenommen und gegebenenfalls in anderen geeigneten Schutzröhrchen geführt werden. Bei einer solchen Aufteilung verwendet man üblicherweise einen Aufteiladapter, an dem beispielsweise die Röhrchen einzeln befestigt werden. Bei einer anderen Technik wird beispielsweise eine entsprechende Anzahl von Röhrchen aus der Kassette direkt herausgeführt. Es ist jedoch sinnvoll, die Glasfasern, die aus den Kassetten oder aus der Bündelader herausgeführt werden, gegen mechanische Einflüsse zu schützen.

Es ist allgemein auch bekannt, die Glasfasern in dünnen Röhrchen, sogenannten Hohladern im Verteilerfeld zu führen. Dabei sind jedoch unterschiedliche Durchmesser und unterschiedliche Längen von Hohladern erforderlich. Außerdem müssen die Hohladern beidseitig an den Kassetten wie auch am Kabelende befestigt werden. So sind beispielsweise Kassetten bekannt, die Klemmnuten zur Arretierung einzelner Hohladern aufweisen. Dazu werden dann auf der Baustelle vom Monteur beispielsweise zusammengehörige Hohladern zu Bündeln gefaßt und mit Kabelbindern an der jeweils zugehörigen Kassette befestigt. Diese Prozedur erfordert jedoch hohen Montageaufwand, da die Hohladern zunächst von einer Vorratsrolle abgelängt, verlegt und einzeln befestigt werden müssen. Dies ist allgemeiner Stand der Technik, wie er derzeit in Verteilerfeldern angewendet wird.

Aus der DE 44 05 666 Al ist eine Kabelmuffenverbindung für Glasfaserkabel der eingangs genannten Art bekannt.

Aus der US 5,515,472 ist eine Glasfaserspleiß-Muffe bekannt, welche mehrere, gestapelte Kassetten zur Organisation der Spleiße, Spleißhalter und Führungsrohre zum Zuführen der optischen Fasern an die Spleißkassetten hat.

Aufgabe der vorliegenden Erfindung ist, eine Kabelmuffenverbindung der eingangs genannten Art zu schaffen, bei welcher der Montageaufwand bei der Herstellung der Verteilerfelder reduziert ist. Dies wird mit den Merkmalen in kennzeichnenden Teil des Anspruchs 1 gelöst. Vorteilhafte Weiterdiletungen der Erfindung sind in den Unteransprüchen beschrieden.

Die Ausführungsbeispiele gemäß der Erfindung zum Schutz von Glasfasern für Nachrichtenübertragungen ergeben für den Monteur einen erheblichen Arbeitsaufwand, da für ihn bereits zusammengefaßte Verbundelemente zur Verfügung gestellt werden, welche gegebenenfalls auch bereits in der erforderlichen Länge individuell abgelängt sind. Durch die Zusammenfassung der einzelnen Hohladern ergibt sich auch eine erhebliche Vereinfachung bei der Fixierung dieser Verbundelemente, da sie aus einem Aufteilpunkt heraus abgehen und dann in einfacher Weise einzeln zu den entsprechenden Verteilpunkten geführt werden können. Diese Verbundelemente aus zusammengefaßten einzelnen Hohladern können als rundes Bündel oder auch als flaches Bändchen ausgeführt werden.

Im Grunde ist es somit möglich, für eine Verteilermuffe ein genau auf die Verlegungserfordernisse zugeschnittenes Verbundelementesystem bereitzustellen. Ein derartig vorkonfektioniertes Verbundelementesystem ergibt für den Monteur eine erhebliche Einsparung an Montagezeiten, da das Zuschneiden, Verlegen und Fixieren einzelner Hohladern entfällt.

Das Verbinden der einzelnen Hohladern entlang von Mantellinien kann zum Beispiel durch Aufschmelzen der äußeren Deckschicht und anschließendes Zusammenpressen erfolgen. Auch ein gegenseitiges Verkleben mit Schmelzklebern oder UV-aushärtenden Klebern, Zweikomponentenklebern oder Sekudenklebern ist möglich, wobei sowohl ein diskontinuierlicher als auch ein kontinuierlicher Verbund hergestellt werden kann. Es ist auch möglich, durch Koextrusion mehrerer Hohladern bereits hier einen entsprechenden Verbund herzustellen.

Bei den Hohladern, die für eine derartige Anwendung geeignet sind, ist eine spezielle Materialkombination nötig. Besonders geeignet ist hierfür im Innenbereich der Hohlader ein harter, aber elastischer Kunststoff wie zum Beispiel Polycarbonat (PC), damit die Hohlader nicht abknickt und gegebenenfalls die Glasfasern beschädigt. Im Außenbereich ist jedoch eine weiche, leicht klebrige Schicht z.B. aus Polyurethan aufgebracht, durch die die gegenseitige Haftung der Hohladern erhöht wird. Die Erfindung wird nun anhand von neun Figuren näher erläutert.
- Figur 1: zeigt die Anwendung eines erfindungsgemäßen Schutzes innerhalb einer Kabelmuffe.
- Figur 2: zeigt ein diskontinuierliches Verbundelement mit einem Verbindungsformteil.
- Figur 3: zeigt ein Verbundelement mit bereits abgelängten Hohladern.
- Figur 4: zeigt das Verbundelement nach Figur 5 in frontseitiger Ansicht.
- Figur 5: zeigt ein Verbundelement mit einem Verbindungsformteil und abgelängten Hohladern.
- Figur 6: zeigt die Frontansicht des Verbundelementes nach Figur 7.
- Figur 7: zeigt ein Verbundelement in runder Bündelform.

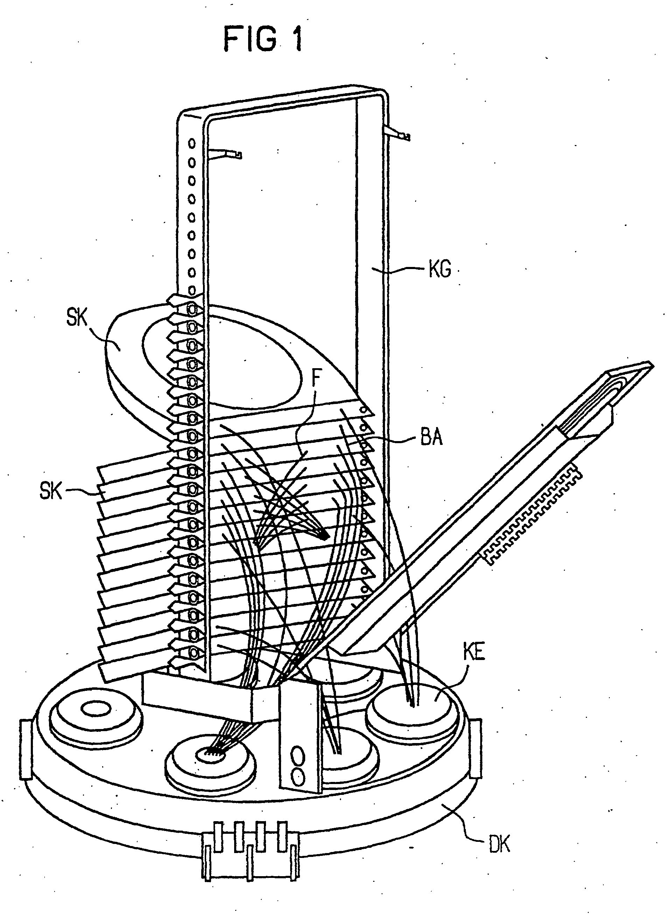

In Figur 1 wird der Einsatz des Schutzes von Glasfasern für Nachrichtenübertragung mit Hohladern als Ausführungsbeispiel aufgezeigt. Es handelt sich dabei um eine Haubenmuffe, deren Haube jedoch abgenommen ist, mit einem Dichtungskörper DK, auf den ein Kassettengestell KG montiert ist. In diesem Kassettengestell KG sind einzelne Spleißkassetten SK für Lichtwellenleiter-Spleiße klappbar eingehängt. Auf der Rückseite des Kassettengestells KG befindet sich nun das Verteilerfeld für die Glasfasern F und die Bündeladern BA, wobei letztere von Kabeleingängen KE zu den einzelnen Spleißkassetten geführt sind. Die einzelnen Glasfasern F, die zwischen den einzelnen Spleißkassetten SK geführt sind, wie auch beispielsweise die Bündeladern BA sollen geschützt geführt werden, um Beschädigungen zu vermeiden. Gemäß der Erfindung werden nun die Glasfasern F und/oder die Bündeladern BA mit einem Schutz aus Verbundelementen gemäß der Erfindung versehen. Bei dieser skizzenhaften Darstellung wird bereits deutlich, daß sich bei der Verwendung von Verbundelementen gemäß der Erfindung gegenüber der Verwendung von einzelnen Hohladern erhebliche Montageeinsparungen erzielen lassen. Die Ausführungen derartiger Verbundelemente werden nun anhand der folgenden Figuren näher erläutert.

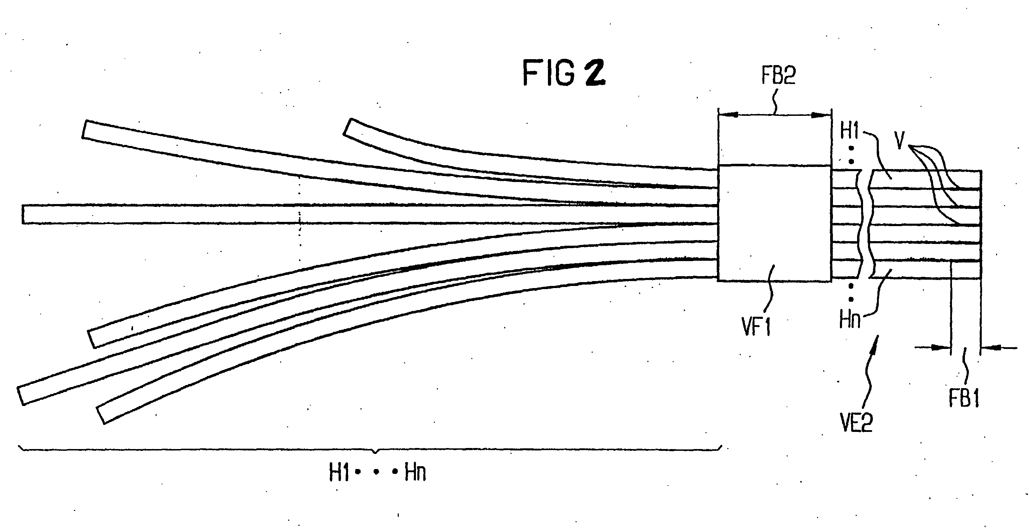

Figur 2 vermittelt den Aufbau eines Verbundelementes VE2 als diskontinuierlich zusammengefaßtes Element mit Hohladern H1 bis Hn. Dabei sind hier zwei Varianten dargestellt, die in Kombination oder auch einzeln verwendet werden können. So wird die gegenseitige Verbindung der Hohladern H1 bis Hn an den ersten Enden in einem endlichen Fixierbereich FB1 vorgenommen. Damit ist der gemeinsame Ausgangspunkt für eine Befestigung erstellt. Im entsprechenden Abstand von diesem ersten Fixierbereich, der sich zum Beispiel nach einem Verzweigungspunkt richtet, ist hier in einem zweiten Fixierbereich FB2 ein Verbindungsformteil VF1 vorgesehen, mit dem eine weitere Verbundstelle geschaffen wird. Dieses Verbindungsformteil VF1 kann beispielsweise aus einem Schmelzkleber bestehen, der unter Umständen zunächst verschoben und dann durch Einwirkung von Wärme fixiert werden kann. In diesem Fall erfolgt nach diesem Verbindungsformteil VF1 eine Aufteilung des Verbundelementes VE2 in die einzelnen Hohladern Hl bis Hn, so daß von hier aus eine Verteilung auf die entsprechenden Teilpunkte erfolgen kann. Die Ablängung der Hohladern H1 bis Hn kann nun manuell erfolgen, wenn die Länge nicht bereits werksseitig vorgegeben worden ist.

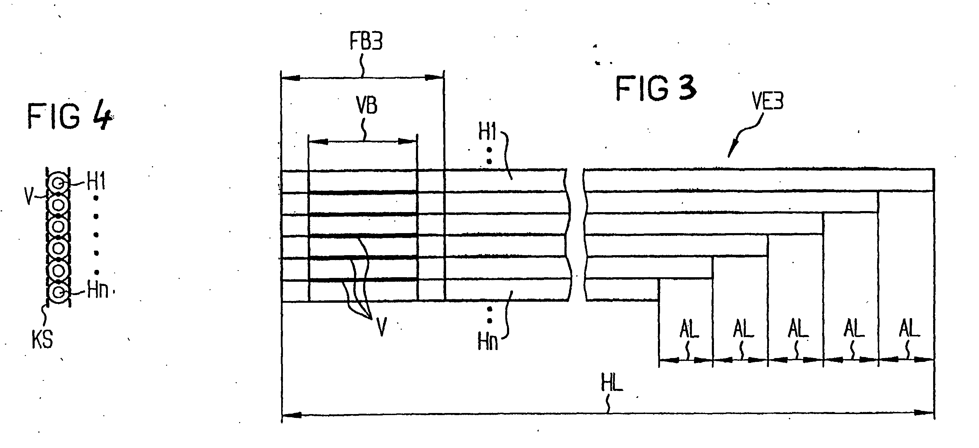

In Figur 3 wird ein Verbundelement VE3 mit Hohladern Hl bis Hn dargestellt, wobei zum Beispiel werksseitig bereits die längste Hohlleiterlänge HL vorgegeben ist. Durch entsprechende Abtrennlängen werden dann - zum Beispiel wiederum werksseitig - entsprechende Anpaßlängen abgetrennt. Die einzelnen Hohladern H1 bis Hn sind in einem Verbindungsbereich VB der im Fixierbereich FB3 der ersten Enden liegt, miteinander verbunden, so daß danach eine weite Auffächerung der Hohladern H1 bis Hn des Verbundelementes VE3 erfolgen kann.

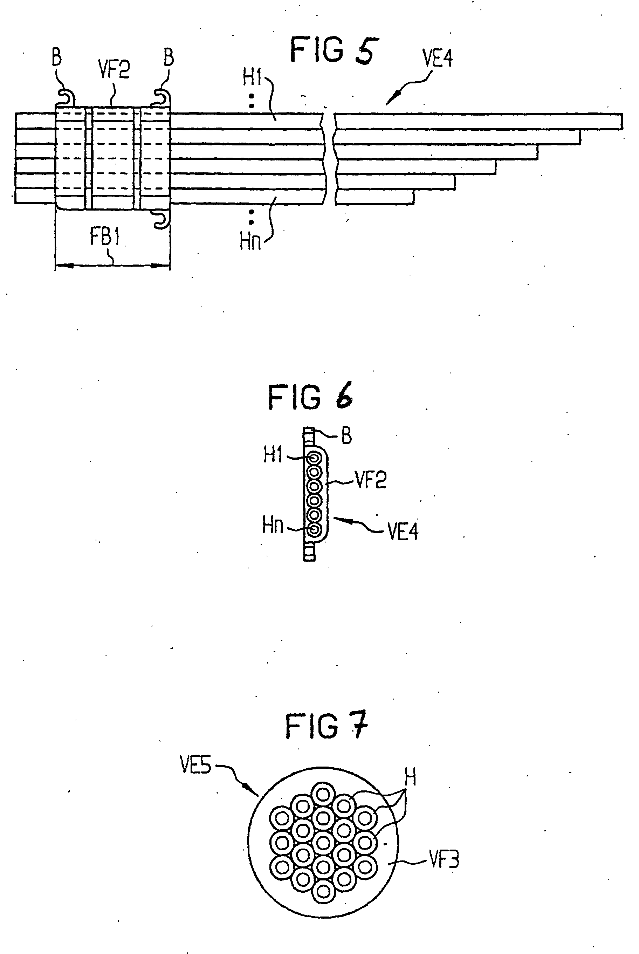

Figur 4 zeigt das Verbundelement VE3 nach Figur 5 in Frontansicht mit seinen bandförmig angeordneten Hohladern H1 bis Hn. Als Verbindungselemente sind hier zwei Varianten aufgezeigt, die alternativ eingesetzt werden können. So ist es möglich, die einzelnen Hohladern H1 bis Hn jeweils entlang von Mantellinien mit einem Verbindungselement, zum Beispiel einem Kleber miteinander zu verbinden. Es ist aber auch möglich, die einzelnen Hohladern Hl bis Hn mit Hilfe eines Klebestreifens ein- oder beidseitig miteinander zu verbinden.

Figur 5 zeigt ein ähnliches Verbundelement VE4, bei dem die einzelnen Hohladern H1 bis Hn mit Hilfe eines Formteils VF2 in der Nähe der ersten Enden im Fixierbereich FB4 zusammengehalten werden. Dieses Formteil kann aus Kunststoff bestehen, das entsprechende Einkerbungen oder Ausformungen oder Löcher aufweist, in die die Hohlleiter H1 bis Hn eingeführt und fixiert werden. Außerdem ist das Verbindungsformteil VF2 mit Befestigungsmitteln B, zum Beispiel mit Haken, versehen, mit denen das Verbundelement an einem vorgesehenen Befestigungspunkt fixiert werden kann.

Die Figur 6 zeigt das Ausführungsbeispiel nach Figur 7 in Frontansicht, woraus hervorgeht, daß die einzelnen Hohladern H1 bis Hn bandförmig in Öffnungen des Verbindungsformteils VF2 gefaßt sind. Außerdem treten die Befestigungsmittel B des Verbundelementes VE4 in Erscheinung.

In Figur 7 wird ein Verbundelement VE5 gezeigt, bei dem die Hohladern H so zusammengefaßt sind, daß sich mit einem umgebenden Verbindungsformteil VF3 eine runde Querschnittsform ergibt. Im übrigen lassen sich alle gezeigten Ausführungsbeispiele bezüglich der Befestigungen und der kontinuierlichen wie diskontinuierlichen Verbindungen auf dieses Verbundelement VE5 übertragen, so daß sich eine weitere Erläuterung erübrigt.

## Patentansprüche

1. Kabelmuffenverbindung für Glasfaserkabel, mit einer Kabelmuffe, die ein Verteilerfeld für Glasfasern und Hohladern von Glasfaserkabeln aufweist, und mehreren in der Kabelmuffe angeordneten Hohladern (H1 bis Hn), **dadurch gekennzeichnet, daß** die Hohladern (H1 bis Hn) der Länge nach zu einem Verbundelement (VE) zusammengefaßt sind, indem sie an ihren einen Endabschnitten mittels langgestreckter, zwischen den Hohladern (H1 bis Hn) angeordneter Verbindungen (V) miteinander verbunden sind sowie an einem Längsabschnitt, der in einem Abstand von dem dem einen Endabschnitt zugeordneten Ende der Hohladern (H1 bis Hn) angeordnet ist, insgesamt von einem Verbindungsformteil (VF) umfaßt sind, und daß die Hohladern (H1 bis Hn) an ihren anderen Endabschnitten als einzelne, separate Hohladern (H1 bis Hn) vorgesehen sind, so daß sie ausgehend von den zugehörigen Enden auftrennbar und einzeln auf erforderliche Länge (HL) abtrennbar sind.

2. Kabelmuffenverbindung nach Anspruch 1, **dadurch gekennzeichnet, daß** die langgestreckten Verbindungen (V) durch Verklebungen, vorzugsweise mit Schmelzkleber, entlang von berührenden Mantellinien der Hohladern (H1 bis Hn) vorgenommen sind.

3. Kabelmuffenverbindung nach Anspruch 1, **dadurch gekennzeichnet, daß** die langgestreckten Verbindungen (V) durch Verschweißungen entlang von berührenden Mantellinien der Hohladern (H1 bis Hn) vorgenommen sind.

4. Kabelmuffenverbindung nach Anspruch 1, **dadurch gekennzeichnet, daß** die langgestreckten Verbindungen (V) durch Koextrusion mehrerer Hohladern (H1 bis Hn) zusammenhängend hergestellt sind.

5. Kabelmuffenverbindung nach einem der vorhergehenden Ansprüche, **dadurch gekennzeichnet, daß** das Verbindungsformteil (VF) die Hohladern (H1 bis Hn) formschlüssig umfaßt.

6. Kabelmuffenverbindung nach Anspruch 5, **dadurch gekennzeichnet, daß** das Verbindungsformteil aus Schmelzkleber besteht.

7. Kabelmuffenverbindung nach Anspruch 1, **dadurch gekennzeichnet, daß** das Verbindungsformteil ein flexibler Klebebandstreifen (KS) ist.

8. Kabelmuffenverbindung nach einem der vorhergehenden Ansprüche, **dadurch gekennzeichnet, daß** mindestens ein Befestigungselement (BE) im Fixierbereich (FB1 bis FB4) der Hohladern (H1 bis Hn) oder am Verbindungsformteil (VF1, VF2) angeordnet ist.

9. Kabelmuffenverbindung nach einem der vorhergehenden Ansprüche, **dadurch gekennzeichnet, daß** das Verbundelement (VE5) aus Hohladern (H) als rundes Bündel oder als flaches Band ausgebildet ist.

10. Kabelmuffenverbindung nach einem der vorhergehenden Ansprüche, **dadurch gekennzeichnet, daß** jede Hohlader (H) aus einer konzentrisch verlaufenden Materialkombination besteht, wobei der Innenbereich aus hartem und elastischem Kunststoff wie Polycarbonat und der Außenbereich aus einer weichen, leicht klebrigen Schicht aus z.B. Polyurethan gebildet ist.

## Claims

1. Cable sleeve connection for fibre-optic cables, with a cable sleeve which has a distribution area for optical fibres and loose buffer tubes of fibre-optic cables, and a plurality of loose buffer tubes (H1 to Hn) arranged in the cable sleeve, **characterized in that** the loose buffer tubes (H1 to Hn) are grouped together lengthwise to form a composite element (VE), **in that** they are connected to one another at their one end portions by means of elongated connections (V) arranged between the loose buffer tubes (H1 to Hn) and are enclosed altogether by a moulded connecting part (VF) at a longitudinal portion which is arranged at a distance from the end of the loose buffer tubes (H1 to Hn) assigned to the one end portion, and **in that** the loose buffer tubes (H1 to Hn) are provided at their other end portions as individual, separate loose buffer tubes (H1 to Hn), so that, starting from the associated ends, they can be separated and individually cut off to the required length (HL).

2. Cable sleeve connection according to Claim 1, **characterized in that** the elongated connections (V) are made by adhesive bonds, preferably with hot-melt adhesive, along touching generatrices of the loose buffer tubes (H1 to Hn).

3. Cable sleeve connection according to Claim 1, **characterized in that** the elongated connections (V) are made by welds along touching generatrices of the loose buffer tubes (H1 to Hn).

4. Cable sleeve connection according to Claim 1, **characterized in that** the elongated connections (V) are produced by coextrusion of a plurality of loose buffer tubes (H1 to Hn) in a combined form.

5. Cable sleeve connection according to one of the preceding claims, **characterized in that** the moulded connecting part (VF) encloses the loose buffer tubes (H1 to Hn) with a form fit.

6. Cable sleeve connection according to Claim 5, **characterized in that** the moulded connecting part consists of hot-melt adhesive.

7. Cable sleeve connection according to Claim 1, **characterized in that** the moulded connecting part is a flexible strip of adhesive tape (KS).

8. Cable sleeve connection according to one of the preceding claims, **characterized in that** at least one fastening element (BE) is arranged in the fixing region (FB1 to FB4) of the loose buffer tubes (H1 to Hn) or on the moulded connecting part (VF1, VF2).

9. Cable sleeve connection according to one of the preceding claims, **characterized in that** the composite element (VE5) is formed from loose buffer tubes (H) as a round cluster or as a flat band.

10. Cable sleeve connection according to one of the preceding claims, **characterized in that** each loose buffer tube (H) comprises a concentrically running combination of materials, the inner region being formed from hard and flexible plastic such as polycarbonate and the outer region being formed from a soft, readily adhesive layer of, for example, polyurethane.

## Revendications

1. Raccordement par manchon de câble pour câbles de fibres de verre, comprenant un manchon de câble, qui présente un champ de répartition pour fibres de verre et guides d'ondes de câbles de fibres de verre, et plusieurs guides d'ondes (H1 à Hn) aménagés dans le manchon de câble, **caractérisé en ce que** les guides d'ondes (H1 à Hn) sont regroupés selon la longueur pour former un élément d'assemblage (VE) par le fait qu'on les relie les uns aux autres, sur leurs premières sections d'extrémité, au moyen de raccordements s'étendant en longueur (V) aménagés entre les guides d'ondes (H1 à Hn), et qu'on les entoure tous par une pièce de raccordement moulée (VF) sur une section longitudinale qui est aménagée à une certaine distance de l'extrémité des guides d'ondes (H1 à Hn) affectée à la première section d'extrémité, et **en ce que** les guides d'ondes (H1 à Hn) se présentent, sur leurs autres sections d'extrémité, sous la forme de guides d'ondes séparés individuels (H1 à Hn), de sorte qu'ils puissent être séparés à partir des extrémités concernées et être individuellement coupés à la longueur requise (HL).

2. Raccordement par manchon de câble selon la revendication 1, **caractérisé en ce que** les raccordements s'étendant en longueur (V) sont effectués par des collages, de préférence au moyen de colles fusibles, le long de génératrices contiguës des guides d'ondes (H1 à Hn).

3. Raccordement par manchon de câble selon la revendication 1, **caractérisé en ce que** les raccordements s'étendant en longueur (V) sont effectués par des soudages le long de génératrices contiguës des guides d'ondes (H1 à Hn).

4. Raccordement par manchon de câble selon la revendication 1, **caractérisé en ce que** les raccordements s'étendant en longueur (V) sont réalisés en continu par coextrusion de plusieurs guides d'ondes (H1 à Hn).

5. Raccordement par manchon de câble selon l'une quelconque des revendications précédentes, **caractérisé en ce que** la pièce de raccordement moulée (VF) entoure les guides d'ondes (H1 à Hn) avec adaptation de forme.

6. Raccordement par manchon de câble selon la revendication 5, **caractérisé en ce que** la pièce de raccordement moulée est constituée de colle fusible.

7. Raccordement par manchon de câble selon la revendication 1, **caractérisé en ce que** la pièce de raccordement moulée est une bande souple (KS) de ruban adhésif.

8. Raccordement par manchon de câble selon l'une quelconque des revendications précédentes, **caractérisé en ce qu'**au moins un élément de fixation (BE) est aménagé dans la zone de fixation (FB1 à FB4) des guides d'ondes (H1 à Hn) ou sur la pièce de raccordement moulée (VF1, VF2).

9. Raccordement par manchon de câble selon l'une quelconque des revendications précédentes, **caractérisé en ce que** l'élément d'assemblage (VE5) de guides d'ondes (H) se présente sous la forme d'un faisceau rond ou d'une bande plate.

10. Raccordement par manchon de câble selon l'une quelconque des revendications précédentes, **caractérisé en ce que** chaque guide d'onde (H) est constitué d'une combinaison de matériaux s'étendant concentriquement, la zone interne étant formée d'un matériau synthétique dur et élastique, tel qu'un polycarbonate, et la zone externe étant formée d'une couche molle légèrement collante constituée, par exemple, de polyuréthanne.
